# EUROPEAN PATENT APPLICATION

(11) **EP 4 039 658 A1**
(43) Date of publication of application: **10.08.2022**
(21) Application number: 20871934.4
(22) Date of filing: 18.08.2020
(51) Int. Cl.: C03B 8/00, C01B 25/14, C03C 3/32, H01B 1/06, H01B 1/10, H01B 13/00, H01M 4/36, H01M 4/62, H01M 10/052, H01M 10/0562

(54) **METHOD FOR PRODUCING INORGANIC MATERIAL**

(30) Priority: 02.10.2019 JP 2019182309; 14.04.2020 JP 2020072485
(71) Applicant: Furukawa Co., Ltd., Chiyoda-ku Tokyo 100-8370 (JP)
(72) Inventor: KIKUCHI, Masaaki, Tsukuba-shi, Ibaraki 305-0856 (JP); SUZUKI, Shogo, Tsukuba-shi, Ibaraki 305-0856 (JP)
(74) Representative: Müller, Christian Stefan Gerd
(86) International application number: PCT/JP2020/031133
(87) International publication number: WO 2021/065229

(57) **Abstract**

A method of manufacturing an inorganic material includes: a step (A) of preparing a first inorganic material as a raw material; and a step (B) of obtaining a second inorganic material by crushing the first inorganic material using a ball mill to obtain fine particles of the first inorganic material, the ball mill including a cylindrical container and crushing balls, in which the step (B) includes a step (B1) of putting the first inorganic material and the crushing balls into the cylindrical container and subsequently rotating the cylindrical container about a cylindrical shaft and a step (B2) of moving the cylindrical container such that the first inorganic material moves in the cylindrical shaft direction.

## Description

### TECHNICAL FIELD

The present invention relates to a method of manufacturing an inorganic material.

### BACKGROUND ART

In general, a lithium ion battery is used as a power supply of a small mobile device such as a mobile phone or a laptop. In addition, recently, the lithium ion battery has been used not only as a power supply of a small mobile device but also as a power supply of an electric vehicle, an electric power storage, or the like.

In a currently commercially available lithium ion battery, an electrolytic solution including a combustible organic solvent is used. On the other hand, in a lithium ion battery (hereinafter, also referred to as "all-solid-state lithium ion battery") in which a solid electrolyte is replaced with the electrolytic solution such that the entire battery is made of a solid, a combustible organic solvent is not used in the battery. Therefore, it is considered that a safety device can be simplified and manufacturing costs or productivity is excellent.

As a solid electrolyte material used for the solid electrolyte, for example, a sulfide-based solid electrolyte material is known.

Patent Document 1 (Japanese Unexamined Patent Publication No. 2016-27545) describes a sulfide-based solid electrolyte material having a peak at a position of 2θ = 29.86° ± 1.00° in X-ray diffraction measurement using a CuKα ray and a composition of Li_{2y}+₃PS₄ (0.1 ≤ y ≤ 0.175).

### RELATED DOCUMENT

### PATENT DOCUMENT

[Patent Document 1] Japanese Unexamined Patent Publication No. 2016-27545

### SUMMARY OF THE INVENTION

### TECHNICAL PROBLEM

The energy density of an all-solid-state lithium ion battery can be increased, for example, reducing the proportion of a solid electrolyte material in an electrode active material layer or reducing the thickness of a solid electrolyte layer between a positive electrode and a negative electrode.

Here, in order to reduce the proportion of the solid electrolyte material in the electrode active material layer or to reduce the thickness of the solid electrolyte layer, it is preferable that the solid electrolyte material has a small average particle size.

According to an investigation by the present inventors, the following was clarified. The sulfide-based inorganic solid electrolyte material described in Patent Document 1 includes sulfur. Therefore, the sulfide-based inorganic solid electrolyte material is soft and, when strongly crushed, may aggregate and fixed to an inner wall of a cylindrical container.

The present invention has been made under these circumstances, and an object thereof is to provide a method of manufacturing an inorganic material in which the formation of an aggregate is suppressed and an inorganic material having a small average particle size can be obtained.

### SOLUTION TO PROBLEM

The present inventors conducted a thorough investigation in order to achieve the above-described object. As a result, it was found that, by moving a cylindrical container such that an inorganic material moves in a cylindrical shaft direction when the inorganic material is crushed using a ball mill, the formation of an aggregate can be suppressed, and an inorganic material having a smaller average particle size can be obtained, thereby completing the present invention.

According to the present invention,
there is provided a method of manufacturing an inorganic material, the method including:
a step (A) of preparing a first inorganic material as a raw material; and
a step (B) of obtaining a second inorganic material by crushing the first inorganic material using a ball mill to obtain fine particles of the first inorganic material, the ball mill including a cylindrical container and crushing balls,
in which the step (B) includes a step (B1) of putting the first inorganic material and the crushing balls into the cylindrical container and subsequently rotating the cylindrical container about a cylindrical shaft and a step (B2) of moving the cylindrical container such that the first inorganic material moves in the cylindrical shaft direction.

### ADVANTAGEOUS EFFECTS OF INVENTION

According to the present invention, a method of manufacturing an inorganic material in which the formation of an aggregate is suppressed and an inorganic material having a small average particle size can be obtained.

### BRIEF DESCRIPTION OF THE DRAWINGS

Fig. 1 is a schematic diagram showing movements of ball mills according to Examples and Comparative Examples, in which (a) shows Examples and (b) represents Comparative Examples.
Fig. 2 is a diagram showing a state in a ball mill after a sulfide-based inorganic solid electrolyte material (Li₁₀P₃S₁₂) in a vitreous state is crushed using the ball mill for a predetermined time in Examples and Comparative Examples, in which (a) shows Examples and (b) represents Comparative Examples.

### DESCRIPTION OF EMBODIMENTS

Hereinafter, an embodiment of the present invention will be described using the drawings. In all the drawings, the same components are represented by common reference numerals, and the description thereof will not be repeated. Unless specified otherwise, a numerical range "A to B" represents A or more and B or less.

A method of manufacturing an inorganic material according to the present embodiment includes: a step (A) of preparing a first inorganic material as a raw material; and a step (B) of obtaining a second inorganic material by crushing the first inorganic material using a ball mill to obtain fine particles of the first inorganic material, the ball mill including a cylindrical container and crushing balls, in which the step (B) includes a step (B1) of putting the first inorganic material and the crushing balls into the cylindrical container and subsequently rotating the cylindrical container about a cylindrical shaft and a step (B2) of moving the cylindrical container such that the first inorganic material moves in the cylindrical shaft direction.

With the method of manufacturing an inorganic material according to the present embodiment, the formation of an aggregate can be suppressed, and an inorganic material having a small average particle size can be obtained.

Hereinafter, each of the steps will be described in detail.

### (Step (A))

First, a first inorganic material as a raw material is prepared. The first inorganic material may be manufactured or may be available as a commercially available product.

The first inorganic material is not particularly limited as long as it is a material of which fine particles can be obtained, and examples of the first inorganic material include an inorganic solid electrolyte material, a positive electrode active material, and a negative electrode active material.

The inorganic solid electrolyte material is not particularly limited, and examples thereof include a sulfide-based inorganic solid electrolyte material, an oxide-based inorganic solid electrolyte material, and other lithium-based inorganic solid electrolyte materials. Among these, a sulfide-based inorganic solid electrolyte material is preferable.

In addition, the inorganic solid electrolyte material is not particularly limited, and examples thereof include an inorganic solid electrolyte material used for a solid electrolyte layer forming an all-solid-state lithium ion battery.

Examples of the sulfide-based inorganic solid electrolyte material include a Li₂S-P₂S₅ material, a Li₂S-SiS₂ material, a Li₂S-GeS₂ material, a Li₂S-Al₂S₃ material, a Li₂S-SiS₂-Li₃PO₄ material, a Li₂S-P₂S₅-GeS₂ material, a Li₂S-Li₂O-P₂S₅-SiS₂ material, a Li₂S-GeS₂-P₂S₅-SiS₂ material, a Li₂S-SnS₂-P₂S₅-SiS₂ material, a Li2S-P2S5-Li3N material, a Li2S2+x-P4S3 material, and a Li₂S-P₂S₅-P₄S₃ material.

Among these, the Li₂S-P₂S₅ material and the Li₂S-P₂S₅-Li₃N material are preferable from the viewpoint that it has excellent lithium ionic conductivity and has stability to the extent that decomposition or the like does not occur in a wide voltage range. Here, for example, the Li₂S-P₂S₅ material refers to an inorganic material obtained by a chemical reaction caused by mechanically processing an inorganic composition including at least Li₂S (lithium sulfide) and P₂S₅, and the Li₂S-P₂S₅-Li₃N material refers to an inorganic material obtained by a chemical reaction caused by mechanically processing an inorganic composition including at least Li₂S (lithium sulfide), P₂S₅, and Li₃N.

Here, in the present embodiment, examples of the lithium sulfide includes lithium polysulfide.

Examples of the oxide-based inorganic solid electrolyte material include: a NASICON type such as LiTi₂(PO₄)₃, LiZr₂(PO₄)₃, or LiGe2 (PO₄)_{3;} a perovskite type such as (La_{0.5+x}L_{10.5-3x})TiO₃; a Li₂O-P₂O₅ material; and a Li₂O-P₂O₅-Li₃N material.

Examples of the other lithium-based inorganic solid electrolyte material include LiPON, LiNbO₃, LiTaO₃, Li₃PO₄, LiPO₄₋ₓNₓ (x satisfies 0 < x ≤ 1), LiN, LiI, and LISICON.

Further, a glass ceramic obtained by precipitating crystal of the inorganic solid electrolyte materials can also be used as the inorganic solid electrolyte material.

The sulfide-based inorganic solid electrolyte material according to the present embodiment preferably includes Li, P, and S as constituent elements. In addition, in the sulfide-based inorganic solid electrolyte material according to the present embodiment, from the viewpoint that a smaller average particle size can be obtained, it is preferable that the sulfide-based inorganic solid electrolyte material as the first inorganic material is in a vitreous state.

In addition, in the sulfide-based inorganic solid electrolyte material according to the present embodiment, from the viewpoint of further improving the lithium ionic conductivity, the electrochemical stability, and the stability and the handling properties against moisture or in air, a molar ratio (Li/P) of the content of Li to the content of P in the solid electrolyte material is preferably 1.0 or higher and 10.0 or lower, more preferably 2.0 or higher and 5.0 or lower, still more preferably 2.5 or higher and 4.0 or lower, still more preferably 2.8 or higher and 3.6 or lower, still more preferably 3.0 or higher and 3.5 or lower, still more preferably 3.1 or higher and 3.4 or lower, and still more preferably 3.1 or higher and 3.3 or lower. In addition, a molar ratio (S/P) of the content of S to the content of P is preferably 1.0 or higher and 10.0 or lower, more preferably 2.0 or higher and 6.0 or lower, more preferably 3.0 or higher and 5.0 or lower, still more preferably 3.5 or higher and 4.5 or lower, still more preferably 3.8 or higher and 4.2 or lower, still more preferably 3.9 or higher and 4.1 or lower, and still more preferably 4.0.

Here, the contents of Li, P, and S in the solid electrolyte material according to the present embodiment can be obtained, for example, by ICP emission spectroscopy or X-ray photoelectron spectroscopy.

The sulfide-based inorganic solid electrolyte material according to the present embodiment can be used for any application where lithium ionic conductivity is required. In particular, it is preferable that the sulfide-based inorganic solid electrolyte material according to the present embodiment is used for a lithium ion battery. More specifically, the sulfide-based inorganic solid electrolyte material according to the present embodiment is used for a positive electrode active material layer, a negative electrode active material layer, an electrolyte layer, or the like in a lithium ion battery. Further, the sulfide-based inorganic solid electrolyte material according to the present embodiment is suitably used for a positive electrode active material layer, a negative electrode active material layer, a solid electrolyte layer, or the like forming an all-solid-state lithium ion battery, and is more suitably used for a solid electrolyte layer forming an all-solid-state lithium ion battery.

Examples of the all-solid-state lithium ion battery to which the sulfide-based inorganic solid electrolyte material according to the present embodiment is applied include an all-solid-state lithium ion battery in which a positive electrode, a solid electrolyte layer, and a negative electrode are stacked in this order.

The positive electrode active material is not particularly limited, and examples of the positive electrode active material include a positive electrode active material that can be used for a positive electrode layer of a lithium ion battery. Examples of the positive electrode active material include a composite oxide such as a lithium cobalt oxide (LiCoO₂), a lithium nickel oxide (LiNiO₂), a lithium manganese oxide (LiMn₂O₄), a solid solution oxide (Li₂MnO₃-LiMO₂ (M=Co, Ni, or the like)), lithium-manganese- nickel oxide (LiNi_{1/3}Mn_{1/3}Co_{1/3}O₂), or an olivine-type lithium phosphate (LiFePO₄); and a sulfide-based positive electrode active material such as CuS, a Li-Cu-S compound, TiS₂, FeS, MoS₂, V₂S₅, a Li-Mo-S compound, a Li-Ti-S compound, a Li-V-S compound, or a Li-Fe-S compound.

The negative electrode active material is not particularly limited, and examples of the negative electrode active material include a negative electrode active material that can be used for a negative electrode layer of a lithium ion battery. Examples of the negative electrode active material include: a metal material mainly formed of a lithium alloy, a tin alloy, a silicon alloy, a gallium alloy, an indium alloy, or an aluminum alloy; a lithium titanium composite oxide (for example, Li₄Ti₅O₁₂), and a graphite material.

Hereinafter, a method of manufacturing the sulfide-based inorganic solid electrolyte material in the vitreous state will be described.

The sulfide-based inorganic solid electrolyte material in the vitreous state can be obtained, for example, by preparing a mixture including lithium sulfide and phosphorus sulfide and mechanical processing this mixture such that the lithium sulfide and the phosphorus sulfide as raw materials are vitrified in a chemical reaction.

The mixture including lithium sulfide and phosphorus sulfide can be obtained, for example, by mixing the respective raw materials at a predetermined molar ratio such that the target sulfide-based inorganic solid electrolyte material has a desired composition ratio.

Here, the mixing ratio between the respective raw materials in the mixture is adjusted such that the obtained sulfide-based inorganic solid electrolyte material has a desired composition ratio.

A method of mixing the respective raw materials is not particularly limited as long as it is a mixing method capable of uniformly mixing the respective raw materials. For example, the raw materials can be mixed using a ball mill, a beads mill, a vibrating mill, an impact crushing device, a mixer (for example, a pug mixer, a ribbon mixer, a tumbler mixer, a drum mixer, or a V-type mixer), a kneader, a twin-screw kneader, an air flow grinder, or the like.

Mixing conditions such as a stirring rate, a processing time, a temperature, a reaction pressure, or a gravitational acceleration applied to the mixture during the mixing of the respective raw materials can be appropriately determined depending on the amount of the mixture processed.

The lithium sulfide used as a raw material is not particularly limited, and a commercially available lithium sulfide may be used. For example, lithium sulfide obtained by reaction of lithium hydroxide and hydrogen sulfide may be also be used. From the viewpoint of obtaining the high-purity sulfide-based inorganic solid electrolyte material and suppressing a side reaction, it is preferable that lithium sulfide having little impurities is used.

Here, in the present embodiment, examples of the lithium sulfide includes lithium polysulfide. As the lithium sulfide, Li₂S is preferable.

The phosphorus sulfide used as a raw material is not particularly limited. For example, commercially available phosphorus sulfide (for example, P₂S₅, P₄S₃, P₄S₇, or P₄S₅) can be used. From the viewpoint of obtaining the high-purity sulfide-based inorganic solid electrolyte material and suppressing a side reaction, it is preferable that phosphorus sulfide having little impurities is used. As the phosphorus sulfide, P₂S₅ is preferable.

Lithium nitride may be further used as a raw material. Here, Nitrogen in the lithium nitride is discharged into the system as N₂. Therefore, by using lithium nitride as a raw material, only the Li composition can be increased with respect to the sulfide-based inorganic solid electrolyte material including Li, P, and S as constituent elements.

The lithium nitride according to the present embodiment is not particularly limited, and a commercially available lithium nitride (for example, Li₃N) may be used. For example, lithium nitride obtained by reaction of metallic lithium (for example, Li foil) and nitrogen gas may be also be used. From the viewpoint of obtaining the high-purity solid electrolyte material and suppressing a side reaction, it is preferable that lithium nitride having little impurities is used.

Next, the sulfide-based inorganic solid electrolyte material in the vitreous state is obtained by mechanically processing the mixture including lithium sulfide and phosphorus sulfide such that the lithium sulfide and the phosphorus sulfide as raw materials are vitrified in a chemical reaction.

Here, the mechanical process refers to a process of causing two or more kinds of inorganic compounds to mechanically collide with each other to be vitrified in a chemical reaction, for example, a mechanochemical process.

In addition, from the viewpoint of realizing an environment where water or oxygen is removed at a high level in the vitrification step, it is preferable that the mechanical process is performed in a dry condition, and it is more preferable that the mechanical process is a dry mechanochemical process.

By using the mechanochemical process, the respective raw materials can be mixed while crushing the raw materials into fine particles. Therefore, the contact area of the respective raw materials can be increased. As a result, the reaction of the respective raw materials can be accelerated. The sulfide-based inorganic solid electrolyte material in the vitreous state can be obtained with higher efficiency.

Here, the mechanochemical process refers to a method of vitrifying a target composition while applying a mechanical energy such as a shear force, an impact force, or a centrifugal force thereto. Examples of a device for performing the vitrification through the mechanochemical process include: a crusher and disperser such as a ball mill, a beads mill, a vibrating mill, a turbo mill, a mechano-fusion, a disc mill, or a roll mill; a rotation and impact crushing device including a mechanism as a combination of rotation (shearing stress) and impact (compressive stress) represented by a rock drill, a vibration drill, or an impact driver; and a high-pressure grinding roll. In particular, from the viewpoint of efficiently generating a very high impact energy, a ball mill or a beads mill is preferable, and a ball mill is more preferable. In addition, from the viewpoint of obtaining excellent continuous productivity, for example, a roll mill; a rotation and impact crushing device including a mechanism as a combination of rotation (shearing stress) and impact (compressive stress) represented by a rock drill, a vibration drill, or an impact driver; or a high-pressure grinding roll is preferable.

In addition, it is preferable that the mechanochemical process is performed in an inert atmosphere. As a result, a reaction of the sulfide-based inorganic solid electrolyte material with water vapor, oxygen, or the like can be suppressed.

In addition, the inert atmosphere refers to a vacuum atmosphere or an inert gas atmosphere. In the inert atmosphere, in order to avoid contact with water, the dew point is preferably -30°C or lower, more preferably -50°C or lower, and still more preferably -60°C or lower. The inert gas atmosphere refers to an atmosphere of inert gas such as argon gas, helium gas, or nitrogen gas. In order to prevent impurities from being mixed in a product, it is preferable that the purity of the inert gas is as high as possible . A method of introducing the inert gas into the mixed system is not particularly limited as long as it is a method capable of filling the mixed system with the inert gas atmosphere. Examples of the introduction method include a method of purging inert gas and a method continuously introducing inert gas at a given flow rate.

Mixing conditions such as a rotation speed, a processing time, a temperature, a reaction pressure, or a gravitational acceleration applied to the mixture during the mechanical process of the mixture including lithium sulfide and phosphorus sulfide can be appropriately determined depending on the kind of the mixture or the amount thereof processed. In general, as the rotation speed increases, the glass production rate increases, and as the processing time increases, the glass conversion rate increases.

Typically, when X-ray diffraction analysis is performed using CuKα rays as a radiation source, if a diffraction peak derived from the raw material is lost or decreases, it can be determined that the mixture is vitrified and a sulfide-based inorganic solid electrolyte material in a vitreous state is obtained.

Here, in the step of vitrifying the mixture including lithium sulfide and phosphorus sulfide, it is preferable that the mechanical process is performed until the lithium ionic conductivity measured using an alternating current impedance method under measurement conditions of 27.0°C, an applied voltage of 10 mV, and a measurement frequency range of 0.1 Hz to 7 MHz is preferably 0.5 × 10⁻⁴ S·cm⁻¹ or higher and preferably 1.0 × 10⁻⁴ S·cm⁻¹ or higher. As a result, a sulfide-based inorganic solid electrolyte material having further improved lithium ionic conductivity can be obtained.

### (Step (B))

Next, a second inorganic material is obtained by crushing the first inorganic material prepared in the step (A) using a ball mill to obtain fine particles of the first inorganic material, the ball mill including a cylindrical container and crushing balls.

The step (B) includes a step (B1) of putting the first inorganic material and the crushing balls into the cylindrical container and subsequently rotating the cylindrical container about a cylindrical shaft and a step (B2) of moving the cylindrical container such that the first inorganic material moves in the cylindrical shaft direction.

Here, the step (B1) and the step (B2) may be performed simultaneously or separately. In addition, the step (B2) may be continuously performed while performing the step (B1), or the steps (B1) and (B2) may be performed intermittently.

It is preferable that, in the step (B), the first inorganic material is crushed in a dry state. When the first inorganic material is crushed in a dry state, an organic solvent or water as a dispersion medium is unnecessary, deterioration by a reaction or hydrolysis between the inorganic material and organic molecules can be prevented, a step of separating the organic solvent or water is unnecessary, and the manufacturing steps can be simplified.

Here, in the present embodiment, the ball mill including the cylindrical container and the crushing balls is a ball mill that rotates about a cylindrical shaft, and does not include a planetary motion type ball mill.

In addition, it is preferable that the step (B) is performed in an inert atmosphere. As a result, a reaction of the inorganic material with water vapor, oxygen, or the like can be suppressed.

In addition, the inert atmosphere refers to a vacuum atmosphere or an inert gas atmosphere. In the inert atmosphere, in order to avoid contact with water, the dew point is preferably -30°C or lower, more preferably -50°C or lower, and still more preferably -60°C or lower. The inert gas atmosphere refers to an atmosphere of inert gas such as argon gas, helium gas, or nitrogen gas. In order to prevent impurities from being mixed in a product, it is preferable that the purity of the inert gas is as high as possible . A method of introducing the inert gas into the mixed system is not particularly limited as long as it is a method capable of filling the mixed system with the inert gas atmosphere. Examples of the introduction method include a method of purging inert gas and a method continuously introducing inert gas at a given flow rate.

Crushing conditions such as a processing time, a temperature, or a gravitational acceleration applied to the inorganic material in the step (B) can be appropriately determined depending on the kind of the inorganic material or the amount thereof processed.

The rotation speed of the cylindrical container in the step (B1) is not particularly limited because it can be appropriately determined depending on the kind of the inorganic material or the amount thereof processed. For example, the rotation speed of the cylindrical container in the step (B1) is 30 rpm or higher and 200 rpm or lower and preferably 60 rpm or higher and 120 rpm or lower.

In addition, it is preferable that the rotation speed of the cylindrical container is a critical rotation speed or lower.

Here, the critical rotation speed refers to a speed at which the cylindrical container rotates in a state where the crushing balls are in close contact with an inner wall of the cylindrical container due to a balance between the centrifugal force of the crushing balls and the gravitational force. When the ball diameter of the crushing balls relative to the inner diameter D [m] of the cylindrical container can be ignored, the critical rotation speed (Nc) is represented by Nc [rpm] = 42.3 /√D.

In the method of manufacturing an inorganic material according to the present embodiment, in the step (B2), the inorganic material is moved in the cylindrical shaft direction, for example, by reciprocating the cylindrical container in the cylindrical shaft direction and/or reciprocating at least one end of the cylindrical container in a direction perpendicular to the cylindrical shaft direction.

The speed of the reciprocation in the step (B2) is not particularly limited because it can be appropriately determined depending on the kind of the inorganic material or the amount thereof processed. For example, the speed of the reciprocation in the step (B2) is 1 cpm or higher and 30 cpm or lower and preferably 2 cpm or higher and 6 cpm or lower.

The diameter of the crushing balls is, for example, 0.1 mm or more and 10.0 mm or less and, from the viewpoint that a smaller average particle size can be obtained, is preferably 1.0 mm or more and 3.0 mm or less.

In the method of manufacturing an inorganic material according to the present embodiment, it is preferable that the crushing balls includes two or more kinds of crushing balls having different diameters, and it is more preferable that the crushing balls includes three or more kinds of crushing balls having different diameters. As a result, an inorganic material having a smaller average particle size can be obtained.

In addition, in the method of manufacturing an inorganic material according to the present embodiment, it is preferable that the crushing balls include first crushing balls having a diameter in a range of 1.5 mm or more and 2.5 mm or less and second crushing balls having a diameter in a range of 0.2 mm or more and less than 1.5 mm, and it is more preferable that the crushing balls further include third crushing balls having a diameter of more than 2.5 mm and 10.0 mm or less in addition to the first crushing balls and the second crushing balls. As a result, an inorganic material having a smaller average particle size can be obtained.

It is preferable that at least surfaces of the crushing balls are formed of at least one kind of material selected from a ceramic material and a metal material.

Examples of the metal material include centrifugally chilled cast steel, SUS, Cr-coated SUS, and Cr-coated quenched steel.

In addition, when at least surfaces of the crushing balls according to the present embodiment are formed of a ceramic material, incorporation of an unnecessary metal component derived from the crushing balls into the obtained inorganic material can be suppressed, and an inorganic material having a higher purity can be obtained.

Examples of the ceramic material include stabilized zirconia, alumina, silicon carbide, and silicon nitride.

In the method of manufacturing an inorganic material according to the present embodiment, optionally, a step of classifying the first inorganic material may be further performed before the step (B). By removing coarse particles from the first inorganic material through the classification operation, microparticulation of the first inorganic material can be performed more effectively in the Step (B) . In addition, the above-described classification method is not particularly limited, and a well-known method such as a sieve can be used.

The second inorganic material obtained using the method of manufacturing an inorganic material according to the present embodiment is not particularly limited, but an average particle size dso in a weight average particle size distribution measured using a laser diffraction scattering particle size distribution method is preferably 0.01 µm or more and 20 µm or less, more preferably 0.05 µm or more and 10 µm or less, still more preferably 0.10 µm or more and 8.0 µm or less, still more preferably 0.10 µm or more and 5.0 µm or less, and still more preferably 0.50 µm or more and 4.0 µm or less.

By adjusting the average particle size dso of the second inorganic material to be in the above-described range, for example, the energy density of an all-solid-state lithium ion battery can be further improved while maintaining excellent handling properties.

### (Annealing Step)

In the method of manufacturing an inorganic material according to the present embodiment, from the viewpoint of further improving the lithium ionic conductivity of the obtained inorganic material, an annealing step of crystallizing at least a part of the inorganic material may be further performed. The annealing step may be performed before the step (B) or may be performed after the step (B) . From the viewpoint that a smaller average particle size can be obtained, it is preferable that the annealing step is performed after the step (B) .

By performing the annealing step, at least a part of the inorganic material in a vitreous state can be crystallized to obtain an inorganic material in a glass ceramic state. As a result, for example, an inorganic material having further improved lithium ionic conductivity can be obtained.

The temperature at which the inorganic material in the vitreous state is heated is not particularly limited as long as it is a temperature at which crystallization can be sufficiently accelerated. For example, from the viewpoint of effectively accelerating crystallization while suppressing thermal decomposition or the like of the inorganic material, the temperature is preferably in a range of 220°C or higher and 500°C or lower, more preferably in a range of 250°C or higher and 400°C or lower, still more preferably in a range of 260°C or higher and 350°C or lower, and still more preferably in a range of 270°C or higher and 350°C or lower.

The time for which the inorganic material is heated is not particularly limited as long as it is the time for which the desired inorganic material in the glass ceramic state can be obtained. For example, the time is in a range of 1 minute or longer and 24 hours or shorter, preferably 0.5 hours or longer and 8 hours or shorter, and more preferably 1 hour or longer and 3 hours or shorter. A heating method is not particularly limited, and examples thereof include a method using a calcination furnace. Conditions such as a temperature or a time during heating can be appropriately adjusted in order to optimize properties of the inorganic material.

In addition, it is preferable that the inorganic material is heated, for example, in an inert gas atmosphere. As a result, deterioration (for example, oxidation) of the inorganic material can be prevented.

Examples of the inert gas when the inorganic material is heated include argon gas, helium gas, and nitrogen gas. In order to prevent impurities from being mixed in a product, it is preferable that the purity of the inert gas is as high as possible. In addition, in order to avoid contact with water, the dew point is preferably -30°C or lower, more preferably -50°C or lower, and still more preferably -60°C or lower. A method of introducing the inert gas into the mixed system is not particularly limited as long as it is a method capable of filling the mixed system with the inert gas atmosphere. Examples of the introduction method include a method of purging inert gas and a method continuously introducing inert gas at a given flow rate.

In the annealing step, it is preferable that, in a spectrum obtainedby X-ray diffraction in which a CuKα ray is used as a radiation source, the annealing process is performed until a diffraction peak different from that of the inorganic material in the vitreous state is observed. Here, the observation of the diffraction peak different from that of the inorganic material in the vitreous state represents that at least a part of the inorganic material in the vitreous state is crystallized to enter a glass ceramic state.

Typically, when X-ray diffraction analysis is performed using CuKα rays as a radiation source, if a new diffraction peak different from the diffraction peak of the inorganic material in the vitreous state appears, it can be determined that the inorganic material is annealed to enter a glass ceramic state.

Hereinafter, the embodiment of the present invention has been described. However, the embodiment is merely an example of the present invention, and various configurations other than the above-described configurations can also be adopted.

In addition, the present invention is not limited to the above-described embodiments, and modifications, improvements, and the like within a range where the object of the present invention can be achieved are included in the present invention.

### [Examples]

Hereinafter, the present invention will be described in more detail using Examples and Comparative Examples. However, the present invention is not limited to these Examples and Comparative Examples.

### [1] Measurement Method

First, a measurement method in the following Examples and Comparative Examples will be described.

### (1) Particle Size Distribution

The particle size distribution of a sulfide-based inorganic solid electrolyte material obtained in each of Examples and Comparative Examples was measured with a laser diffraction method using a laser diffraction scattering particle size distribution analyzer (manufactured by Malvern Panalytical Ltd., Mastersizer 3000). Based on the measurement result, a particle size corresponding to a 50% cumulative value (dso, average particle size) in the weight cumulative distribution of the sulfide-based inorganic solid electrolyte material was obtained.

### (2) Verification of Aggregate

The state in a ball mill was observed to investigate whether or not an aggregate was formed after a sulfide-based inorganic solid electrolyte material in a vitreous state was crushed using the ball mill for a predetermined time.

### <Example 1>

### (1) Preparation of First Inorganic Material

A sulfide-based inorganic solid electrolyte material in a vitreous state as the first inorganic material was prepared according to the following procedure.

Regarding the raw materials, Li₂S (manufactured by Furukawa Co., Ltd., purity: 99.9%), P₂S₅ (manufactured by Kanto Chemical Co., Inc.), and Li₃N (manufactured by Furukawa Co., Ltd.) were used.

First, in a glove box, Li₂S powder, P₂S₅ powder, and Li₃N powder (Li₂S:P₂S₅:Li₃N = 71.1:23.7:5.3 (mol%)) were mixed to prepare a raw material inorganic composition.

Next, the raw material inorganic composition and 6200 g of ZrO₂ balls having a diameter of 25 mm were put into an alumina cylindrical container (inner volume: 5 L) in the glove box, and the cylindrical container was sealed.

Next, the alumina cylindrical container was attached to a ball mill machine, and a mechanochemical process was performed at 100 rpm for 500 hours such that the raw material inorganic composition was vitrified. Next, by sieving the obtained inorganic material through a sieve having a pore size of 20 µm, a sulfide-based inorganic solid electrolyte material (Li₁₀P₃S₁₂) in a vitreous state as the first inorganic material was obtained. Regarding the sulfide-based inorganic solid electrolyte material in the vitreous state as the first inorganic material, the average particle size dso was 4.5 µm, dio was 2.0 µm, and d₉₀ was 10 µm.

### (2) Preparation of Second Inorganic Material

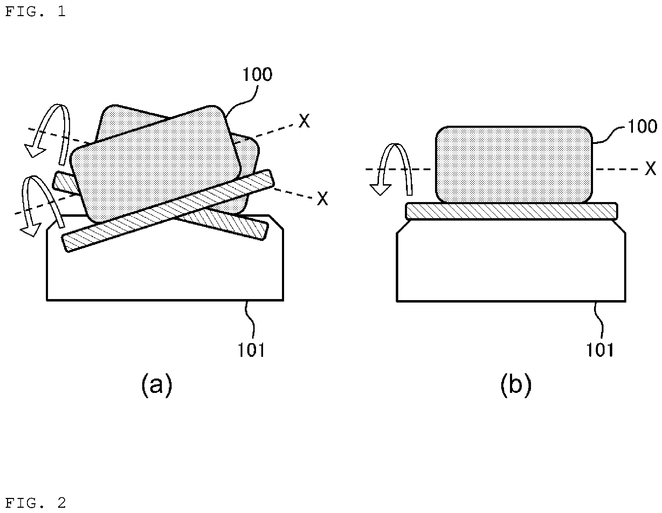

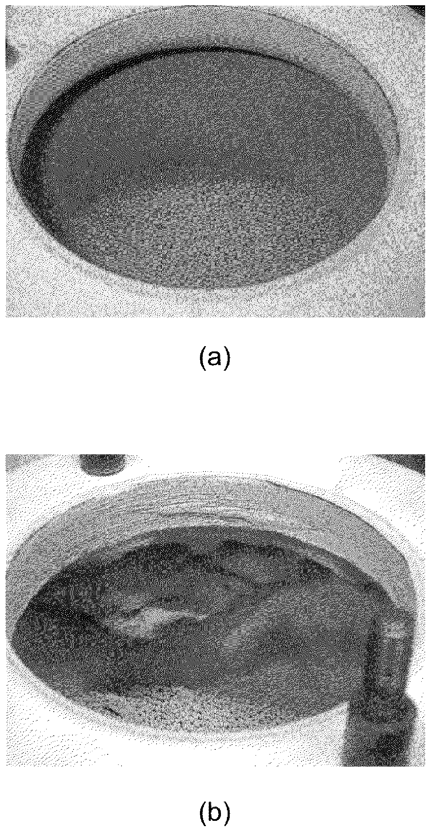

Next, 300 g of the sulfide-based inorganic solid electrolyte material in the vitreous state as the first inorganic material and 6200 g of ZrO₂ balls having a diameter of 2.0 mm were put into an alumina cylindrical container (inner volume: 5 L) in a glove box, and the cylindrical container was sealed. Next, the alumina cylindrical container was attached to a ball mill machine, and the first inorganic material was crushed for 50 hours to obtain fine particles of the first inorganic material. As a result, a second inorganic material was obtained. Here, as shown in (a) of Fig. 1, a cylindrical container 100 was placed on a rotating table 101, was rotated about a cylindrical shaft X at 100 rpm. In addition, by oscillating vertically cylindrical container 100, both ends of the cylindrical container 100 were reciprocated at an oscillation cycle of 3 cpm in a direction perpendicular to the cylindrical shaft X direction.

Regarding the sulfide-based inorganic solid electrolyte material in the vitreous state as the obtained second inorganic material, the average particle size dso was 3.7 µm, d₁₀ was 2.0 µm, and d₉₀ was 6.4 µm.

In addition, (a) of Fig. 2 shows the state in the ball mill after completion of the crushing of the sulfide-based inorganic solid electrolyte material (Li₁₀P₃S₁₂) in the vitreous state. As can be seen from (a) of Fig. 2, an aggregate of the sulfide-based inorganic solid electrolyte material in the vitreous state was not observed.

### <Example 2>

### (1) Preparation of First Inorganic Material

A first inorganic material was prepared using the same method as that of Example 1. Regarding the sulfide-based inorganic solid electrolyte material in the vitreous state as the first inorganic material, the average particle size dso was 4.5 µm, d₁₀ was 2.0 µm, and d₉₀ was 10 µm.

### (2) Preparation of Second Inorganic Material

Next, 300 g of the sulfide-based inorganic solid electrolyte material in the vitreous state as the first inorganic material, 6200 g of ZrO₂ balls having a diameter of 2.0 mm, 1200 g of ZrO₂ balls having a diameter of 1.0 mm, and 1200 g of ZrO₂ balls having a diameter of 5.0 mm were put into an alumina cylindrical container (inner volume: 5 L) in a glove box, and the cylindrical container was sealed. Next, the alumina cylindrical container was attached to a ball mill machine, and the first inorganic material was crushed for 50 hours to obtain fine particles of the first inorganic material. As a result, a second inorganic material was obtained. Here, as shown in (a) of Fig. 1, a cylindrical container 100 was placed on a rotating table 101, was rotated about a cylindrical shaft X at 100 rpm. In addition, by oscillating vertically cylindrical container 100, both ends of the cylindrical container 100 were reciprocated at an oscillation cycle of 3 cpm in a direction perpendicular to the cylindrical shaft X direction.

Regarding the sulfide-based inorganic solid electrolyte material in the vitreous state as the obtained second inorganic material, the average particle size dso was 2.0 µm, dio was 1.0 µm, and d₉₀ was 3.0 µm.

In addition, an aggregate of the sulfide-based inorganic solid electrolyte material in the vitreous state was not observed in the ball mill after completion of the crushing of the sulfide-based inorganic solid electrolyte material (Li₁₀P₃S₁₂) in the vitreous state.

### <Example 3>

### (1) Preparation of First Inorganic Material

A first inorganic material was prepared using the same method as that of Example 1. Regarding the sulfide-based inorganic solid electrolyte material in the vitreous state as the first inorganic material, the average particle size dso was 4.5 µm, d₁₀ was 2.0 µm, and d₉₀ was 10 µm.

### (2) Preparation of Second Inorganic Material

Next, 300 g of the sulfide-based inorganic solid electrolyte material in the vitreous state as the first inorganic material, 6200 g of ZrO₂ balls having a diameter of 2.0 mm, and 1200 g of ZrO₂ balls having a diameter of 1.0 mm were put into an alumina cylindrical container (inner volume: 5 L) in a glove box, and the cylindrical container was sealed. Next, the alumina cylindrical container was attached to a ball mill machine, and the first inorganic material was crushed for 50 hours to obtain fine particles of the first inorganic material. As a result, a second inorganic material was obtained. Here, as shown in (a) of Fig. 1, a cylindrical container 100 was placed on a rotating table 101, was rotated about a cylindrical shaft X at 100 rpm. In addition, by oscillating vertically cylindrical container 100, both ends of the cylindrical container 100 were reciprocated at an oscillation cycle of 3 cpm in a direction perpendicular to the cylindrical shaft X direction.

Regarding the sulfide-based inorganic solid electrolyte material in the vitreous state as the obtained second inorganic material, the average particle size dso was 3.0 µm, d₁₀ was 2.0 µm, and d₉₀ was 5.0 µm.

In addition, an aggregate of the sulfide-based inorganic solid electrolyte material in the vitreous state was not observed in the ball mill after completion of the crushing of the sulfide-based inorganic solid electrolyte material (Li₁₀P₃S₁₂) in the vitreous state.

### <Comparative Example 1>

A sulfide-based inorganic solid electrolyte material in a vitreous state was prepared using the same method as that of Examples, except that the cylindrical container 100 was not vertically oscillated (that is, the step (B2) was not performed) as shown in (b) of Fig. 1.

Regarding the sulfide-based inorganic solid electrolyte material in the vitreous state as the obtained second inorganic material, the average particle size dso was 9.8 µm, d₁₀ was 4.0 µm, and d₉₀ was 14.7 µm.

In addition, (b) of Fig. 2 shows the state in the ball mill after completion of the crushing of the sulfide-based inorganic solid electrolyte material (Li₁₀P₃S₁₂) in the vitreous state. As can be seen from (b) of Fig. 2, an aggregate of the sulfide-based inorganic solid electrolyte material in the vitreous state was observed.

It can be understood from a comparison between Examples and Comparative Examples that, in the manufacturing method according to Examples where the step (B2) was performed, the formation of an aggregate was suppressed and an inorganic material having a smaller average particle size was able to be obtained.

The present application claims priority based on Japanese Patent Application No. 2019-182309 filed on October 2, 2019 and Japanese Patent Application No. 2020-072485 filed on April 14, 2020, the entire contents of which are incorporated herein by reference.

### REFERENCE SIGNS LIST

- 100:: cylindrical container
- 101:: rotating table
- X:: cylindrical shaft

## Claims

1. A method of manufacturing an inorganic material, the method comprising:
a step (A) of preparing a first inorganic material as a raw material; and
a step (B) of obtaining a second inorganic material by crushing the first inorganic material using a ball mill to obtain fine particles of the first inorganic material, the ball mill including a cylindrical container and crushing balls, wherein the step (B) includes a step (B1) of putting the first inorganic material and the crushing balls into the cylindrical container and subsequently rotating the cylindrical container about a cylindrical shaft and a step (B2) of moving the cylindrical container such that the first inorganic material moves in the cylindrical shaft direction.

2. The method of manufacturing an inorganic material according to claim 1,
wherein in the step (B), the first inorganic material is crushed in a dry state.

3. The method of manufacturing an inorganic material according to claim 1 or 2,
wherein in the step (B2), the first inorganic material is moved in the cylindrical shaft direction by reciprocating the cylindrical container in the cylindrical shaft direction and/or reciprocating at least one end of the cylindrical container in a direction perpendicular to the cylindrical shaft direction.

4. The method of manufacturing an inorganic material according to any one of claims 1 to 3,
wherein each of the first inorganic material and the second inorganic material is an inorganic solid electrolyte material, a positive electrode active material, or a negative electrode active material.

5. The method of manufacturing an inorganic material according to any one of claims 1 to 3,
wherein each of the first inorganic material and the second inorganic material includes a sulfide-based inorganic solid electrolyte material.

6. The method of manufacturing an inorganic material according to claim 5,
wherein the sulfide-based inorganic solid electrolyte material has lithium ionic conductivity and includes Li, P, and S as constituent elements.

7. The method of manufacturing an inorganic material according to claim 6,
wherein a molar ratio Li/P of a content of Li to a content of P in the sulfide-based inorganic solid electrolyte material is 1.0 or higher and 10.0 or lower, and a molar ratio S/P of a content of S to the content of P in the sulfide-based inorganic solid electrolyte material is 1.0 or higher and 10.0 or lower.

8. The method of manufacturing an inorganic material according to any one of claims 5 to 7,
wherein the sulfide-based inorganic solid electrolyte material as the first inorganic material is in a vitreous state.

9. The method of manufacturing an inorganic material according to any one of claims 1 to 8,
wherein the crushing balls includes two or more kinds of crushing balls having different diameters.

10. The method of manufacturing an inorganic material according to claim 9,
wherein the crushing balls include first crushing balls having a diameter in a range of 1.5 mm or more and 2.5 mm or less and second crushing balls having a diameter in a range of 0.2 mm or more and less than 1.5 mm.

11. The method of manufacturing an inorganic material according to claim 10,
wherein the crushing balls further include third crushing balls having a diameter of more than 2.5 mm and 10.0 mm or less.

## Amended claims

### Amended claims under Art. 19.1 PCT

1. (Amended) A method of manufacturing an inorganic material, the method comprising:
a step (A) of preparing a first inorganic material as a raw material;
a step (B) of obtaining a second inorganic material by crushing the first inorganic material using a ball mill to obtain fine particles of the first inorganic material, the ball mill including a cylindrical container and crushing balls, wherein the step (B) includes a step (B1) of putting the first inorganic material and the crushing balls into the cylindrical container and subsequently rotating the cylindrical container about a cylindrical shaft and a step (B2) of moving the cylindrical container such that the first inorganic material moves in the cylindrical shaft direction, and
each of the first inorganic material and the second inorganic material includes a sulfide-based inorganic solid electrolyte material.

2. The method of manufacturing an inorganic material according to claim 1,
wherein in the step (B), the first inorganic material is crushed in a dry state.

3. The method of manufacturing an inorganic material according to claim 1 or 2,
wherein in the step (B2), the first inorganic material is moved in the cylindrical shaft direction by reciprocating the cylindrical container in the cylindrical shaft direction and/or reciprocating at least one end of the cylindrical container in a direction perpendicular to the cylindrical shaft direction.

4. The method of manufacturing an inorganic material according to any one of claims 1 to 3,
wherein each of the first inorganic material and the second inorganic material is an inorganic solid electrolyte material, a positive electrode active material, or a negative electrode active material.

5. (canceled)

6. (Amended) The method of manufacturing an inorganic material according to any one of claims 1 to 4,
wherein the sulfide-based inorganic solid electrolyte material has lithium ionic conductivity and includes Li, P, and S as constituent elements.

7. The method of manufacturing an inorganic material according to claim 6,
wherein a molar ratio Li/P of a content of Li to a content of P in the sulfide-based inorganic solid electrolyte material is 1.0 or higher and 10.0 or lower, and a molar ratio S/P of a content of S to the content of P in the sulfide-based inorganic solid electrolyte material is 1.0 or higher and 10.0 or lower.

8. (Amended) The method of manufacturing an inorganic material according to any one of claims 1 to 4, 6 and 7,
wherein the sulfide-based inorganic solid electrolyte material as the first inorganic material is in a vitreous state.

9. (Amended) The method of manufacturing an inorganic material according to any one of claims 1 to 4 and claims 6 to 8,
wherein the crushing balls includes two or more kinds of crushing balls having different diameters.

10. The method of manufacturing an inorganic material according to claim 9,
wherein the crushing balls include first crushing balls having a diameter in a range of 1.5 mm or more and 2.5 mm or less and second crushing balls having a diameter in a range of 0.2 mm or more and less than 1.5 mm.

11. The method of manufacturing an inorganic material according to claim 10,
wherein the crushing balls further include third crushing balls having a diameter of more than 2.5 mm and 10.0 mm or less.
(Explanatory statement of the grounds for Amendment under Article 19)
The Applicant hereby amends the claim 1, 6, 8 and 9.
The claim 1 is amended so as to further recite "The first inorganic material and the second inorganic material include a sulfide-based inorganic solid electrolyte material". The Amendment is based on the original claim 5 and paragraph [0013] of the specification.
The claims 6,8 and 9 are amended so as to further depend on claim 1 and its dependents.
The Applicant hereby removes the claim 5. The original claims 2 - 4, 7, 10 and 11 are retained unchanged.
